# EUROPÄISCHE PATENTANMELDUNG

(11) **EP 0 964 035 A1**
(43) Veröffentlichungstag der Anmeldung: **15.12.1999**
(21) Anmeldenummer: 99110248.4
(22) Anmeldetag: 27.05.1999
(51) Int. Cl.: C09D 4/00, C08F 222/20, C08F 222/28, C09D 5/36

(54) **Verfahren zur Herstellung von Effektlackierungen**

(30) Priorität: 08.06.1998 DE 19825924
(71) Anmelder: Clariant GmbH, 65929 Frankfurt am Main (DE)
(72) Erfinder: Stohr, Andreas Dr., 65830 Kriftel (DE); Schönfeld, Axel Dr., 65207 Wiesbaden (DE)

(57) **Zusammenfassung**

Die Erfindung betrifft ein Verfahren zur Herstellung einer Effektlackierung, dadurch gekennzeichnet, daß mindestens ein pulverförmiges cholesterisches flüssigkristallines polymerisierbares Monomer der allgemeinen Formel (1a), (1b) oder (2)

Z-Y-A-Y-M-Y-X¹ (1a)

[Z-Y-A-Y-]₂-M-Y-X¹ (1b)

[Z-Y-A-Y-M-Y]₂-X² (2)

worin
- X¹ und X²: ein chiraler Rest,
- Y: gleich oder verschieden ist und eine chemische Bindung, O, S, COO, OCO, OCOO, CON(R) oder N(R)CO, wobei R Wasserstoff oder C₁-C₄-Alkyl ist,
- A: C₁-C₃₀-Alkyl,
- M: eine mesogene Gruppe, und
- Z: eine polymerisierbare Gruppe;
oder
mindestens ein pulverförmiges achirales flüssigkristallines polymerisierbares Monomer der allgemeinen Formel (4)

   Z-Y-A-Y-M-Y-A-Y-Z (4)
und mindestens eine dem Rest X¹ und X² und/oder dem Monomer der Formel (1a), (1b) oder (2) zugrundeliegende chirale Verbindung mit Hilfe eines Pulversprühverfahrens auf einen zu lackierenden Gegenstand appliziert, dort auf eine Temperatur im Mesophasenbereich erhitzt und in der cholesterischen Phase ausgehärtet wird.

## Beschreibung

Die Erfindung betrifft Effektlacke auf der Basis von polymerisierbaren flüssigkristallinen Monomeren.
Flüssigkristalline Interferenzpigmente für Effektlacke sind beispielsweise aus der EP 0 066 137 A1 und der DE 42 40 743 A1 bekannt.

Bei den üblichen Fahrzeug-Uni-Lacken sind in der Regel in einem klaren Träger aus Kunstharz Farbpigmente eingelagert, die die gewünschte Farbtönung des Lackes bestimmen. Die Farbwirkung dieser Pigmente beruht auf einer spektral selektiven Absorptionswirkung, so daß von dem auftreffenden Tageslicht ein spektral breiter Anteil von den Pigmenten absorbiert und nur ein spektral schmaler Anteil reflektiert wird.
In dem Bemühen um brillantere Farbeindrücke insbesondere bei Fahrzeugkarosserien hat man Effektpigmente entwickelt, die auf vernetzten, flüssigkristallinen Verbindungen mit chiral-nematischer (cholesterischer) Anordnung basieren. Lacke, die diese Effektpigmente beinhalten, zeichnen sich neben einer besseren Farbbrillanz gegenüber den Uni-Lacken vor allem dadurch aus, daß sie je nach Lichteinfallrichtung und/oder Betrachtungsrichtung einen geänderten Farbeindruck aufweisen.

Cholesterische Verbindungen sind bekannt. Sie bilden eine helikale Überstruktur aus, die zu einer selektiven und blickwinkelabhängigen Reflexion von Licht führt. Von dem einfallenden Licht werden nur diejenigen Lichtwellen reflektiert, deren Wellenlänge mit den äquidistanten Netzebenenabständen der cholesterischen Phase interferieren, während die Lichtanteile anderer Wellenlängen durch den klaren Lack-Körner hindurchgehen und von dem vorzugsweise dunklen Untergrund absorbiert werden. Dieser Reflexionseffekt kann ausgenutzt werden, um Effektpigmente herzustellen. Die plättchenförmigen Effektpigmente zeichnen sich neben einem sehr brillanten Farbeindruck insbesondere dadurch aus, daß sie eine blickwinkelabhängige Farbe aufweisen, d. h. daß zum Beispiel ein mit cholesterischen Pigmenten lackierter Gegenstand bei frontaler Betrachtung grün, bei schrägem Anblick hingegen blau erscheint.
Diese vom Betrachtungswinkel abhängige Farberscheinung der lackierten Oberfläche macht die Lackierung sehr effektvoll und für bestimmte Anwendungsfälle wünschenswert.

Die Bildung von Netzebenen innerhalb einer cholesterischen flüssigkristallinen Schicht kann durch die Verwendung eines automatischen Filmaufziehgerätes und die dabei wirksame mechanische Scherung erreicht werden, was praktisch jedoch nur auf ebenen Flächen möglich ist. Deswegen hat man aus solchen zunächst in ebenem Zustand hergestellten vernetzten Beschichtungen durch vorsichtiges Mahlen und Größenauswahl plättchenförmige Interferenzpigmente hergestellt und diese einem Lack beigemischt.

Aus dem Stand der Technik sind Interferenzpigmente auf der Basis von vernetzten cholesterischen Verbindungen bekannt, wobei diese jeweils als Ganzes aus kleinen Bruchstücken einer dünnen Folie aus vernetzten flüssigkristallinen Verbindungen bestehen. Beim Lackieren mit einem Lack, der diese Pigmente enthält, resultiert eine Beschichtung, die ebenfalls einen Farbflop aufweist, d.h. eine vom Betrachtungs- und Beleuchtungswinkel abhängige Reflexion der Lichtanteile unterschiedlicher Wellenlänge mit ausgeprägtem Maximum an einer bestimmten Stelle des Spektrums. Wegen der Einmischung plättchenförmiger Interferenzpigmente weisen derartige Effektlacke eine Art Metallic- oder Flitter-Effekt auf, der an sich gar nicht unbedingt erwünscht ist.

Nachteilig ist die aufwendige Herstellung der Interferenzpigmente, wodurch sich der Effektlack und dementsprechend die Effektlackierung auf einem Gebrauchsgegenstand recht kostspielig gestalten.

Aus dem Stand der Technik ist weiter bekannt, flüssigkristalline Polymere auf Basis von Polysiloxanen direkt als Beschichtungsmaterial auf den zu lackierenden Gebrauchsgegenstand aufzubringen (EP 0 727 472 A1), wobei sich auch auf gewölbten Flächen ein brillanter Farbeindruck ergeben soll. Als Applikationsverfahren werden Sprühverfahren aus Lösung und als Pulverlack aufgeführt. Während das Sprühverfahren aus Lösung mit den genannten cholesterischen Polysiloxanen möglich ist, ist eine Pulverlackapplikation problematisch. Die verwendeten flüssigkristallinen Polysiloxane besitzen Glasübergangstemperaturen im Bereich von 40°C. Dies macht es sehr schwierig, ein bei Raumtemperatur elektrostatisch sprühfähiges Pulver bereitzustellen, da die erwähnten flüssigkristallinen Polysiloxane bei Raumtemperatur wachsartig sind und sich somit nur sehr schlecht zu einem sprühfähigen Pulver mahlen lassen. Desweiteren benötigen die beschriebenen flüssigkristallinen Polysiloxane aufgrund ihrer hohen Viskosität lange Orientierungszeiten bei hohen Temperaturen, um einen brillanten Farbeindruck zu erzielen (EP 0 727 472 A1, Beispiel 3b: 30 min bei 130°C).

Aufgabe der vorliegenden Erfindung ist es, ein Verfahren bereitzustellen, mit dem eine Effektlackierung durch ein einfaches Pulversprühverfahren direkt auf einen zu lackierenden Gebrauchsgegenstand aufgebracht werden kann, wobei sich auch auf gewölbten Flächen ein brillanter Farbeindruck ergeben soll.

Es wurde gefunden, daß überraschenderweise die nachstehend definierte pulverförmige cholesterische Monomermischung oder bestimmte einzelne Monomere als Pulver in einem Pulversprühverfahren auf einen Gebrauchsgegenstand appliziert werden können und dabei eine Effektlackierung mit dem gewünschten optischen Farbeindruck entsteht.

Gegenstand der vorliegenden Erfindung ist ein Verfahren zur Herstellung einer Effektlackierung, dadurch gekennzeichnet, daß
mindestens ein pulverförmiges cholesterisches flüssigkristallines polymerisierbares Monomer der allgemeinen Formel (1a), (1b) oder (2)

   Z-Y-A-Y-M-Y-X¹ (1a)

   [Z-Y-A-Y-]₂-M-Y-X¹ (1b)

   [Z-Y-A-Y-M-Y]₂-X² (2)

   worin
   - X¹ und X²: ein chiraler Rest,
   - Y: gleich oder verschieden ist und eine chemische Bindung, O, S, COO, OCO, OCOO, CON(R) oder N(R)CO, wobei R Wasserstoff oder C₁-C₄-Alkyl ist,
   - A: C₁-C₃₀-Alkyl, vorzugsweise C₂-C₁₂-Alkyl, wobei die Alkylkette durch ein oder mehrere, beispielsweise 1, 2, 3 oder 4, Gruppen der Formeln, O, S, NH oder NCH₃ unterbrochen sein kann und wobei die Alkylkette auch durch Fluor, Chlor,Brom,Cyan, Methyl oder Ethyl substituiert sein kann,
   - M: eine mesogene Gruppe, und
   - Z: eine polymerisierbare Gruppe;
   oder
mindestens ein pulverförmiges achirales flüssigkristallines polymerisierbares Monomer der allgemeinen Formel (4)

   Z-Y-A-Y-M-Y-A-Y-Z (4)

   worin Z, Y, A und M eine der vorstehenden Bedeutungen haben, und mindestens eine dem Rest X¹ und X² und/oder dem Monomer der Formel (1a), (1b) oder (2) zugrundeliegende chirale Verbindung
mit Hilfe eines Pulversprühverfahrens auf einen zu lackierenden Gegenstand appliziert, dort auf eine Temperatur im Mesophasenbereich erhitzt und in der cholesterischen Phase ausgehärtet wird.

Besonders bevorzugt für A sind Reste der Formeln -(CH₂)ₚ-, -(CH₂CH₂O)ₘ-, -CH₂CH₂-S-CH₂-CH₂- und -CH₂CH₂-NH-CH₂CH₂-,
wobei m eine Zahl von 1 bis 3 und p eine Zahl von 1 bis 12 ist.

Als Reste M kommen insbesondere cycloaliphatische, aromatische oder heteroaromatische Reste der Formel (3) in Betracht

-(D―Y₁)ᵣ―D- (3)

in der die Reste
- D: unabhängig voneinander Cycloalkylen, ein Aromat oder Heteroaromat, die gegebenenfalls durch Fluor, Chlor, Brom, Cyan, Methyl, Methoxy oder Nitro substituiert sind;
- Y₁: O, COO, OCO, CH₂O, OCH₂, CH=N, N=CH oder eine direkte Bindung und
- r: eine Zahl von 0 bis 3 sind.
Vorzugsweise ist r Null oder 1.

Besonders bevorzugte mesogene Gruppen sind 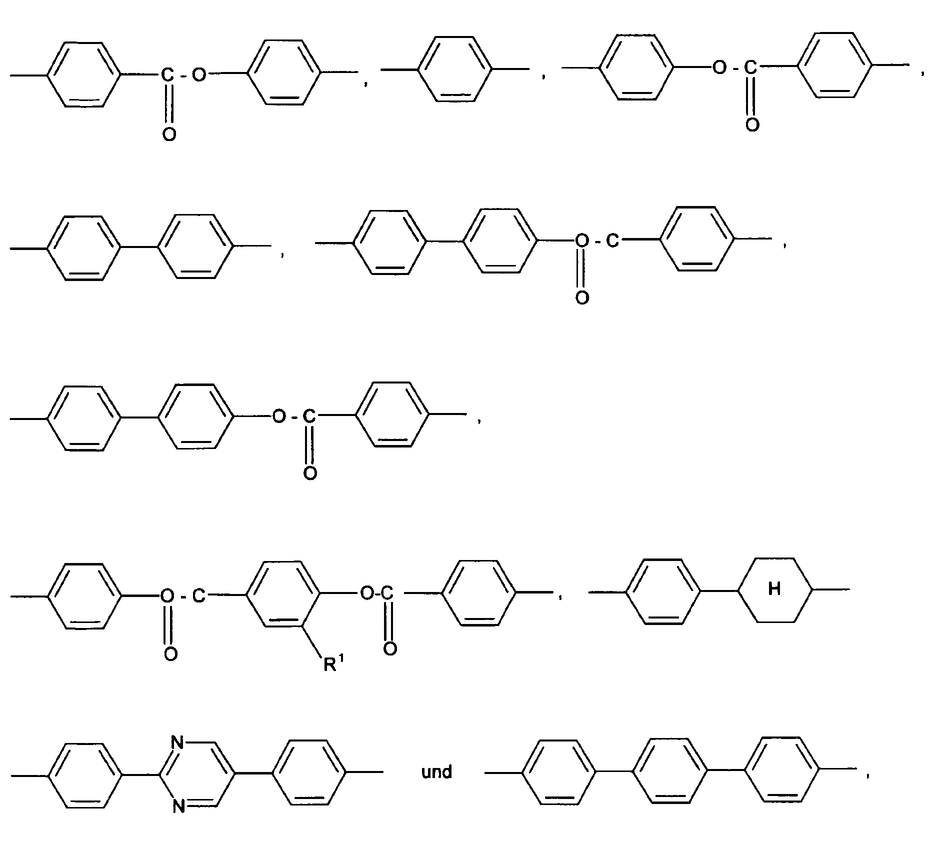 wobei R¹ Wasserstoff, Fluor, Chlor, Brom, Cyano, Methyl, Ethyl oder Nitro ist, sowie

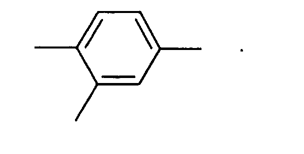

Als polymerisierbare Gruppe Z kommen insbesondere Acrylat-, Methacrylat-, Chloracrylat-, Vinylether-, Styrol- und Epoxid-Reste in Betracht, vorzugsweise Reste der Formeln

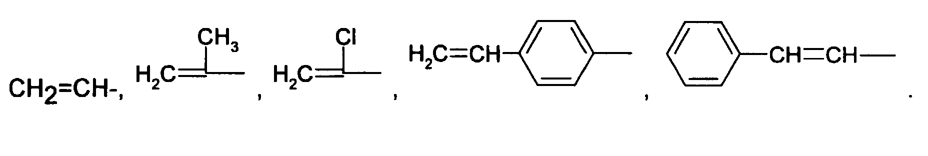

Als chirale Reste kommen in Frage (-, 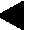 und ◁ bedeuten freie Valenzen):
für X¹ 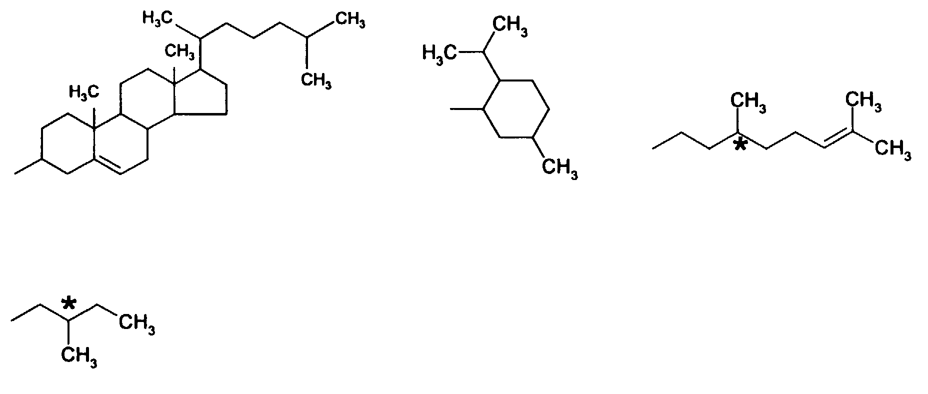
für X²: 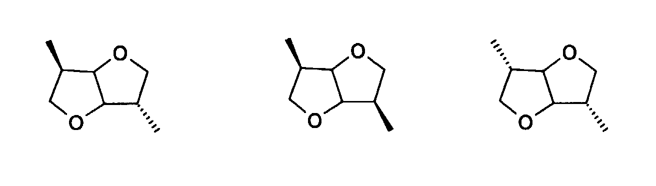 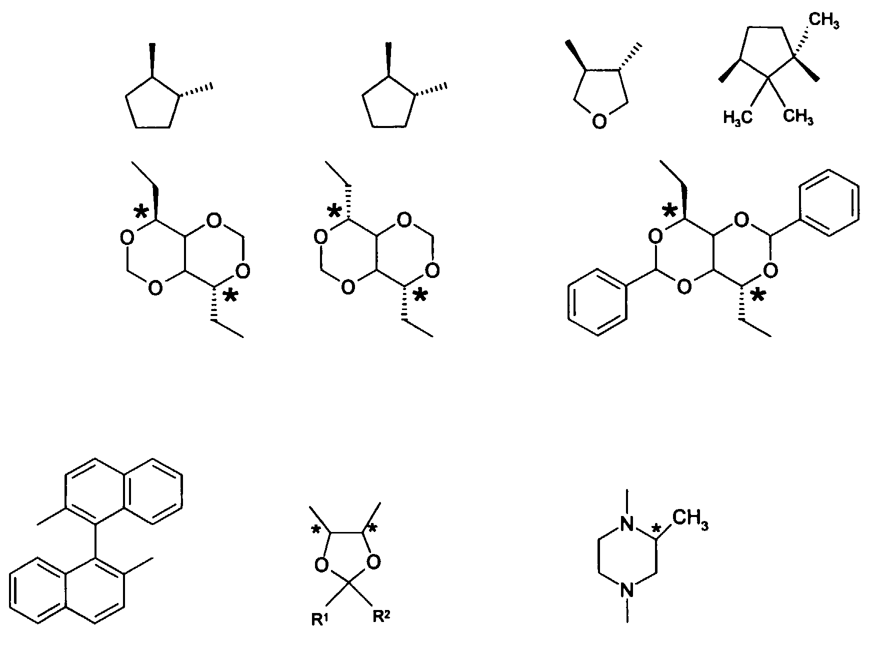 wobei R¹ und R² unabhängig voneinander H, C₁ - C₆ - Alkyl oder Phenyl, vorzugsweise H oder Methyl, sind.

Ein Beispiel für eine Verbindung der Formel (1b) ist

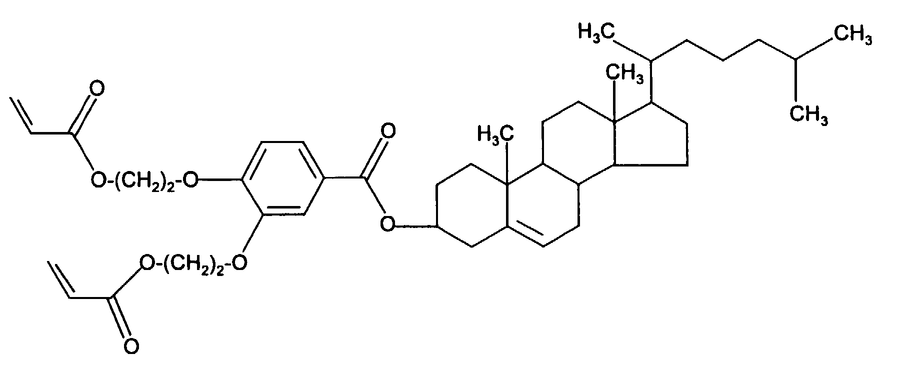

Die chiralen Verbindungen bewirken eine Verdrillung der achiralen flüssigkristallinen Phase zu einer cholesterischen Phase. Dabei hängt das Ausmaß der Verdrillung von der Verdrillungsfähigkeit des chiralen Dotierstoffes und von seiner Konzentration ab. Damit hängt also die Ganghöhe der Helix und wiederum auch die Interferenzfarbe von der Konzentration des chiralen Dotierstoffs ab. Es kann daher für den Dotierstoff kein allgemein gültiger Konzentrationsbereich angegeben werden. Der Dotierstoff wird in der Menge zugegeben, bei der der gewünschte Farbeffekt entsteht.

Das erfindungsgemäße Verfahren hat den Vorteil, daß auf einfache Weise eine direkte Effektlackierung, d.h. ohne den Umweg über ein Pigment, und ohne weitere Zwischenschritte, d.h. ohne eine mechanische Einwirkung zwecks Orientierung des cholesterischen Materials, auf ebenen und auch auf gekrümmten oder in sich gewölbten Flächen bereitgestellt werden kann.

Als Pulversprühverfahren kommen insbesondere übliche elektrostatische Sprühverfahren, wie z.B. das Corona-Verfahren oder triboelektrische bzw. elektrokinetische Verfahren, sowie Wirbelsinterverfahren in Betracht.

Beim Aufheizen des zu lackierenden Gegenstandes auf eine Temperatur im Mesophasenbereich der cholesterischen Monomermischung, normalerweise auf 50 bis 200°C, vorzugsweise auf 60 bis 120°C, bildet sich spontan eine homogene, zusammenhängende Schicht mit cholesterischer Anordnung der Monomermischung in der Grand-Jean Textur, was an einem brillanten Farbeindruck erkennbar ist. Wegen der niedrigen Viskosität der cholesterischen Monomermischung stellt sich der Farbeindruck spontan ein, und ein längeres Tempern ist nicht notwendig. Die entsprechende Orientierung des flüssigkristallinen Materials kann ohne jegliche mechanische Einwirkung erreicht werden. Der erzielte Farbeindruck wird nach dem Beschichtungs- und Aufheizvorgang durch Aushärten in der cholesterischen Phase über einen entsprechenden Härtungsprozeß, der thermisch oder photochemisch induziert sein kann, fixiert.
Auf die Effektlackierung lassen sich bei Bedarf zusätzlich eine oder mehrere Klarlackschichten aufbringen.

Um die Orientierung in der cholesterischen Phase zu optimieren, ist es vorteilhaft, die cholesterische Monomermischung mit einem orientierungsverbessernden Zusatz zu versehen und diese Mischung durch die erfindungsgemäße Pulverversprühung auf die zu beschichtende Substrat-Oberfläche aufzubringen. Solche orientierungsverbessernde Zusätze sind oberflächenaktive Verbindungen, wie sie auch als Verlaufadditive verwendet werden. Dazu gehören Polysiloxane, polyestermodifizierte oder polyethermodifizierte Polysiloxane, hydroxylierte Polyesterharze oder Polyacrylate oder Copolymere mit Acrylatanteilen. Diese Verbindungen können in reiner Form, als Lösung oder auf Kieselgel adsorbiert eingesetzt werden. Die Verlaufadditive verhelfen nicht nur zu einer einheitlichen Orientierung der cholesterischen Phase, sondern begünstigen auch die Filmbildungseigenschaften der cholesterischen Schicht, z.B. verhindern sie die Bildung von Kratern oder Orangenhauteffekten.

Die orientierungsverbessernden Zusätze werden zweckmäßigerweise in Mengen von 0,01 bis 5 Gew.-%, vorzugsweise von 0,05 bis 3 Gew.-%, bezogen auf die Gesamtmischung, eingesetzt.

Durch Zusatz beispielsweise eines oberflächenaktiven Polysiloxans zur flüssigkristallinen Monomermischung zeigen sich nach Aufheizen der Monomermischung in den Temperaturbereich ihrer cholesterischen Phase auf verhältnismäßig dunklen Substraten schließlich die Interferenzfarben der entsprechenden cholesterischen Phase. Man erhält auf diese Weise eine Beschichtung mit Uni-Charakter, d.h. ohne Flitter-Effekt, die zusätzlich einen Farbflop aufweist.
Derartige orientierungsverbessernde und die interferentielle Farbwirkung ändernden Zusätze können unabhängig von der stofflichen Basis der cholesterischen Monomermischung eingesetzt werden.
Die die farbvertiefende Wirkung verursachenden Additive können wahlweise unmittelbar der Beschichtungsmasse zugegeben werden oder auch vor Aufbringen der Beschichtung als Vorbeschichtung appliziert werden.

Weiterhin können übliche Ladungssteuermittel der Beschichtungsmasse zugegeben werden, um das elektrostatische Sprühverhalten der Pulver zu verbessern.

Die Pulverbeschichtungen können auf die unterschiedlichsten Substrate aufgebracht werden. Dies können beispielsweise Gegenstände aus natürlichen oder synthetischen Materialien, wie z.B. Holz, Kunststoffe, Metall, Glas oder Papier sein. Besonders bevorzugt ist die Beschichtung der Karosserie oder von Karosserieteilen von Kraftfahrzeugen.

Der Farbton des Untergrundes, auf den die Effektlackierung aufgetragen wird, bestimmt die Intensität der Farbwirkung einer aufgebrachten cholesterischen Beschichtung.
Besonders bevorzugt sind dunkle Untergründe, da diese den durch die cholesterische Schicht transmittierten Teil des Lichtes absorbieren. Unter Untergrund ist in diesem Zusammenhang nicht nur ein an seiner Oberfläche mit einer dunklen Lackschicht versehenes Substrat zu verstehen, sondern auch ein in sich dunkel gefärbtes Substrat, beispielsweise ein Kunststoffsubstrat oder ein mit einer dunklen Oxidschicht überzogenes Metallsubstrat. Beispiele für dunkle Lackschichten sind elektrophoretisch oder durch Spritz- oder Pulverlackierung aufgebrachte Grundierungen, Kunststoffgrundierungen, Füller- und Steinschlagschutzschichten oder auch unifarbene Basis- und Decklackschichten. Beispiele für dunkle Untergründe sind dunkelrot, dunkelblau, dunkelgrün, dunkelbraun, dunkelgrau und insbesondere schwarz.

Zum Aushärten der polymerisierbaren flüssigkristallinen Monomer(mischungen) können diese Polymerisationsinitiatoren enthalten, die entweder thermisch oder photochemisch zerfallen und so die Härtung bewirken. Dabei sind unter thermischen Polymerisationsinitiatoren solche bevorzugt, die zwischen 20 und 180°C, besonders bevorzugt zwischen 50 und 130°C, zerfallen und die Polymerisation initiieren. Zur photochemischen Härtung sind im Prinzip alle Photoinitiatoren verwendbar. Insbesondere kommen auch Gemische verschiedener Initiatoren zum Einsatz, um die Durchhärtung zu verbessern . Als geeignete Photoinitiatoren für radikalische Polymerisationen kommen z.B. Benzophenon und dessen Derivate, wie Alkylbenzophenone, halogenmethylierte Benzophenone oder 4,4'-Bis(dimethylamino)-benzophenon sowie Benzoin und Benzoinether wie Ethylbenzoinether, Benzilketale wie Benzildimethylketal, Acetophenonderivate, wie Hydroxy-2-methyl-1-phenylpropan-1-on und Hydroxycyclohexylphenylketon in Frage. Ganz besonders gut geeignet sind Acylphosphinoxide wie 2,4,6-Trinmethylbenzoyldiphenylphosphinoxid. Unter den photochemisch aktivierbaren Polymerisationsinitiatoren werden bevorzugt solche eingesetzt, die keine vergilbende Wirkung zeigen.
Besonders bevorzugte Polymerisationsinitiatoren sind auch Boralkylverbindungen sowie Peroxide wie Dibenzoylperoxid und Di-tert.-butyl-peroxid.
Die Photoinitiatoren, die je nach Verwendungszweck der erfindungsgemäßen Effektbeschichtung vorteilhaft in Mengen zwischen 0,01 und 15 Gew.-%, bezogen auf die polymersierbaren Komponenten, eingesetzt werden,können als einzelne Substanzen oder, wegen vorteilhafter synergistischer Effekte, auch in Kombination miteinander verwendet werden.
Für kationische Polymerisationen werden bevorzugt Initiatoren eingesetzt, welche geladene Strukturen aufweisen. Insbesondere kommen Substanzen zum Einsatz, welche, auch in Kombination mit Acylphosphinoxiden eingesetzt werden können, z.B.: 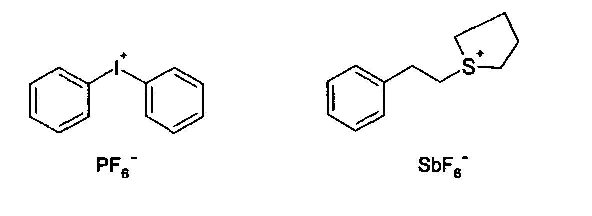 sowie Derivate dieser Verbindungen.
Denkbar ist auch eine Härtung mittels Elektronenstrahlen.
Gewünschtenfalls können den polymerisierbaren Mischungen auch Stabilisatoren gegen UV- und Wettereinflüsse zugesetzt werden. Hierfür eignen sich z.B. Derivate des 2,4-Dihydroxybenzophenons, Derivate des 2-Cyan-3,3-diphenylacrylates, Derivate des 2,2'- oder 4,4'-Tetrahydroxybenzophenons, Derivate des Orthohydroxyphenylbenztriazols, Salicylsäureester, Orthohydroxyphenyl-s-triazine oder sterisch gehinderte Amine. Diese Stoffe können allein oder vorzugsweise in Form von Gemischen eingesetzt werden.
Als Füllstoffe kommen z.B. Rutil, Anatas, Kreide, Talkum und Bariumsulfat in Betracht.
Weiterhin können für coloristische Zwecke noch anorganische oder organische Pigmente beigemischt sein.

### Beispiel 1

Zur Herstellung einer homogenen Mischung werden 35g 1,4-Phenyl-di-(6-acryloyloxyhexyloxy)benzoat, 65g Cholesterylacrylat, 2g 2,2-Dimethyoxy-2-phenylacetophenon (Photoinitiator) und 1g eines Acrylatcopolymeren, z.B. 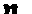 BYK®-361 (Verlaufadditiv, kommerziell erhältlich bei Byk-Chemie GmbH) unter Lichtausschluß in Chloroform gelöst. Anschließend wird das Lösungsmittel abdestilliert und der Rückstand bei Raumtemperatur im Vakuum getrocknet. Die trockene Monomermischung wird in kleinen Portionen mit zerkleinertem Trockeneis (Vermeidung von Klumpenbildung während der Mahlung) zu einem feinen Pulver gemahlen und zur Abtrennung von größeren Teilchen über ein 200µm Sieb gesiebt.

Das gesiebte Pulver wird in den Pulverbehälter des Sprühgeräts "®Tribostar" der Firma Intec, Dortmund, eingefüllt. Das Sprühgerät ist mit einem Normsprührohr und einer Sterninnenstange ausgerüstet. Mit diesem Sprühgerät wird in einer Sprühkabine der Firma Intec, Dortmund, bei hohem Pulverdurchsatz und einem Sprühdruck von 3 bar ein mit einem schwarzen Pulverlack grundiertes Blech durch kreuzweisen Auftrag beschichtet. Zur Filmbildung wird das beschichtete Blech auf eine auf 105°C vorgewärmte Heizplatte gelegt. Dabei bildet sich nach wenigen Sekunden die cholesterische Phase der Monomermischung aus und eine brillante blaugrüne Farbe kann beobachtet werden, die bei schrägem Anblick deutlich nach blau flopt. Dieser Zustand wird anschließend durch eine durch UV-Strahlung induzierte Polymerisation fixiert.
Es entsteht ein homogener cholesterischer Film. Kraterbildung oder ein Orangenhauteffekt werden nicht beobachtet. Ohne weitere Manipulation (z.B. mechanische Scherung, Orientierung im Magnet- oder E-Feld) zeigt die cholesterische Schicht einen brillanten und homogenen Farbeindruck mit einem deutlich ausgeprägten Farbflop bei schräger Betrachtung.

### Beispiel 2

65 g 2-Methylphenyl-1,4-di-(6-acryloyloxyhexyloxy)benzoat, 35 g Cholesteryl-3,4-di-(2-acryloyloxyethoxy)benzoat und 2g 2,2-Dimethyoxy-2-phenylacetophenon (Photoinitiator) und 1g eines hydroxilierten Polyesters, z.B. 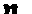 Additol®-XL496 (kommerziell erhältlich bei VIANOVA RESINS) werden unter Lichtausschluß in Chloroform gelöst. Anschließend wird das Lösungsmittel abdestilliert und der Rückstand bei Raumtemperatur im Vakuum getrocknet. Die trockene Monomermischung wird in kleinen Portionen mit zerkleinertem Trockeneis (Vermeidung von Klumpenbildung während der Mahlung) zu einem feinen Pulver gemahlen und zur Abtrennung von größeren Teilchen über ein 200 µm Sieb gesiebt. Das gesiebte Pulver wird in den Pulverbehälter des Sprühgeräts "®Tribostar" der Firma Intec, Dortmund, eingefüllt. Das Sprühgerät ist mit einem Normsprührohr und einer Sterninnenstange ausgerüstet. Mit diesem Sprühgerät wird in einer Sprühkabine der Firma Intec, Dortmund, bei hohem Pulverdurchsatz und einem Sprühdruck von 3 bar ein mit einem schwarzen Pulverlack grundiertes Blech durch kreuzweisen Auftrag beschichtet. Zur Filmbildung wird das beschichtete Blech auf eine auf 80°C vorgewärmte Heizplatte gelegt. Dabei bildet sich nach wenigen Sekunden die cholesterische Phase der Monomermischung aus und eine brillante rote Farbe kann beobachtet werden, die bei schrägem Anblick deutlich nach grün flopt. Dieser Zustand wird anschließend durch eine durch UV Strahlung induzierte Polymerisation fixiert.
Wie unter Beispiel 1 ist die cholesterische Schicht auch hier sehr homogen ausgebildet und eine brillante Farbe kann beobachtet werden.

## Patentansprüche

1. Verfahren zur Herstellung einer Effektlackierung, dadurch gekennzeichnet,
daß mindestens ein pulverförmiges cholesterisches flüssigkristallines polymerisierbares Monomer der allgemeinen Formel (1a), (1b) oder (2)
Z-Y-A-Y-M-Y-X¹ (1a)
[Z-Y-A-Y-]₂-M-Y-X¹ (1b)
[Z-Y-A-Y-M-Y]₂-X² (2)
worin
X¹ und X² ein chiraler Rest,
Y gleich oder verschieden ist und eine chemische Bindung, O, S, COO, OCO, OCOO, CON(R) oder N(R)CO, wobei R Wasserstoff oder C₁-C₄-Alkyl ist,
A C₁-C₃₀-Alkyl, wobei die Alkylkette durch ein oder mehrere Gruppen der Formeln, O, S, NH oder NCH₃ unterbrochen sein kann und wobei die Alkylkette auch durch Fluor, Chlor,Brom,Cyan, Methyl oder Ethyl substituiert sein kann,
M eine mesogene Gruppe, und
Z eine polymerisierbare Gruppe;
oder
mindestens ein pulverförmiges achirales flüssigkristallines polymerisierbares Monomer der allgemeinen Formel (4)
Z-Y-A-Y-M-Y-A-Y-Z (4)
worin Z, Y, A und M eine der vorstehenden Bedeutungen haben, und mindestens eine dem Rest X¹ und X² und/oder dem Monomer der Formel (1a), (1b) oder (2) zugrundeliegende chirale Verbindung
mit Hilfe eines Pulversprühverfahrens auf einen zu lackierenden Gegenstand appliziert, dort auf eine Temperatur im Mesophasenbereich erhitzt und in der cholesterischen Phase ausgehärtet wird.

2. Verfahren nach Anspruch 1, dadurch gekennzeichnet, daß A -(CH₂)ₚ-, (CH₂CH₂O)ₘ-, -CH₂CH₂-S-CH₂-CH₂- oder -CH₂CH₂-NH-CH₂CH₂-, bedeutet, worin m eine Zahl von 1 bis 3 und p eine Zahl von 1 bis 12 ist.

3. Verfahren nach Anspruch 1 oder 2, dadurch gekennzeichnet, daß M ein cycloaliphatischer, aromatischer oder heteroaromatischer Rest der Formel (3)
-(D-Y₁)ᵣ-D- (3)
in der die Reste
D unabhängig voneinander Cycloalkylen, ein Aromat oder Heteroaromat, die gegebenenfalls durch Fluor, Chlor, Brom, Cyan, Methyl, Methoxy oder Nitro substituiert sind;
Y₁ O, COO, OCO, CH₂O, OCH₂, CH=N, N=CH oder eine direkte Bindung und
r eine Zahl von 0 bis 3 sind.

4. Verfahren nach einem oder mehreren der Ansprüche 1 bis 3, dadurch gekennzeichnet, daß Z ein Acrylat-, Methacrylat-, Chloracrylat-, Vinylether-, Styrol- oder Epoxid-Rest ist.

5. Verfahren nach einem oder mehreren der Ansprüche 1 bis 4, dadurch gekennzeichnet, daß X¹ 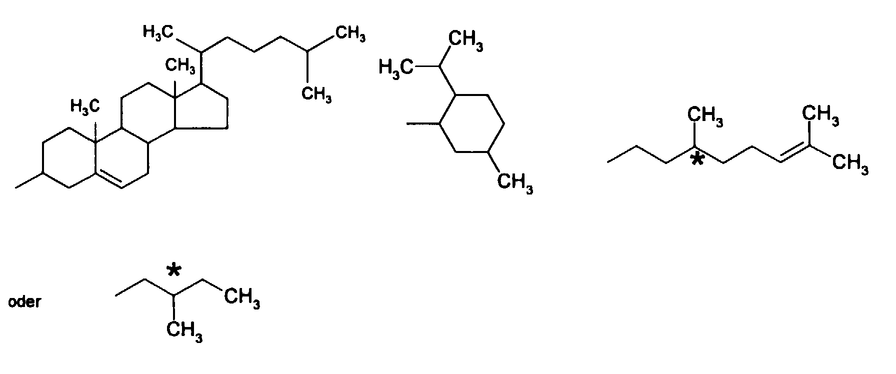 ist.

6. Verfahren nach einem oder mehreren der Ansprüche 1 bis 4, dadurch gekennzeichnet, daß X² 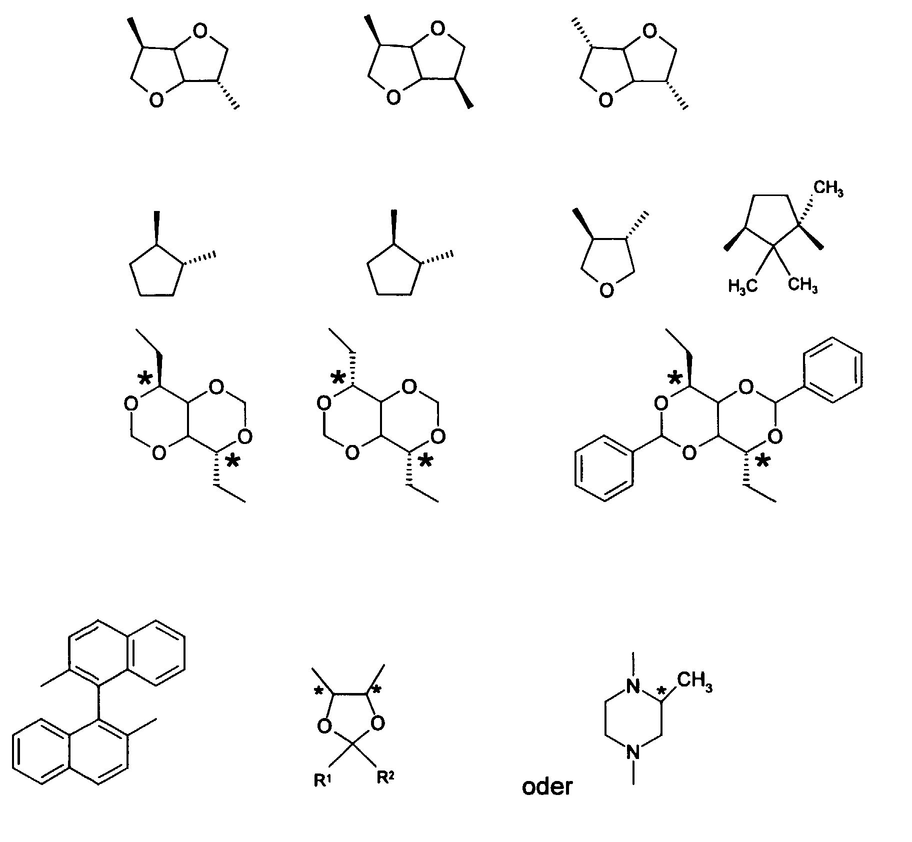 ist.

7. Verfahren nach einem oder mehreren der Ansprüche 1 bis 6, dadurch gekennzeichnet, daß auf eine Temperatur im Mesophasenbereich von 50 bis 200°C, vorzugsweise 60 bis 120°C, erhitzt wird.

8. Verfahren nach einem oder mehreren der Ansprüche 1 bis 7, dadurch gekennzeichnet, daß auf die Effektlackierung eine oder mehrere Klarlackschichten aufgebracht werden.

9. Verfahren nach einem oder mehreren der Ansprüche 1 bis 8, dadurch gekennzeichnet, daß den pulverförmigen Monomeren ein Verlaufadditiv, ein Ladungssteuermittel, ein Polymerisationsinitiator oder eine Kombination davon zugesetzt wird.

10. Verfahren nach einem oder mehreren der Ansprüche 1 bis 9, dadurch gekennzeichnet, daß das Pulversprühverfahren ein Wirbelsinterverfahren oder ein elektrostatisches Sprühverfahren ist.
